# EUROPÄISCHE PATENTSCHRIFT

(11) **EP 3 513 236 B1**
(45) Veröffentlichungstag und Bekanntmachung des Hinweises auf die Patenterteilung: **28.08.2024**
(21) Anmeldenummer: 17772646.0
(22) Anmeldetag: 15.09.2017
(51) Int. Cl.: G02B 21/00, G02B 21/36, G02B 21/06

(54) **VERFAHREN ZUR ERZEUGUNG VON VORSCHAUBILDERN MIT EINEM SCHIEFEEBENENMIKROSKOP SOWIE SCHIEFEEBENENMIKROSKOP UND BILDERZEUGUNGSVORRICHTUNG FÜR EIN SCHIEFEEBENENMIKROSKOP**
METHOD FOR PRODUCING PREVIEW IMAGES WITH AN INCLINED-PLANE MICROSCOPE, INCLINED-PLANE MICROSCOPE, AND IMAGE PRODUCING DEVICE FOR AN INCLINED-PLANE MICROSCOPE
PROCÉDÉ PERMETTANT DE PRODUIRE DES IMAGES DE PRÉVISUALISATION À L'AIDE D'UN MICROSCOPE À PLAN INCLINÉ AINSI QUE MICROSCOPE À PLAN INCLINÉ ET DISPOSITIF D'IMAGERIE POUR UN MICROSCOPE À PLAN INCLINÉ

(30) Priorität: 16.09.2016 LU 93225
(43) Veröffentlichungstag der Anmeldung: 24.07.2019
(73) Patentinhaber: Leica Microsystems CMS GmbH, 35578 Wetzlar (DE)
(72) Erfinder: FAHRBACH, Florian, 69115 Heidelberg (DE)
(74) Vertreter: Grünecker Patent- und Rechtsanwälte PartG mbB
(86) Internationale Anmeldenummer: PCT/EP2017/073300
(87) Internationale Veröffentlichungsnummer: WO 2018/050832

(56) Entgegenhaltungen:
- WO-A2-2013/184758
- WO-A2-2015/109323
- DE-A1- 102010 013 223

## Beschreibung

Die Erfindung betrifft ein Verfahren zum Erzeugen eines Vorschaubildes mit einem Schiefeebenenmikroskop. Ferner betrifft die Erfindung ein Schiefeebenenmikroskop und eine Bilderzeugungsvorrichtung für ein Schiefeebenenmikroskop.

Abtastverfahren zur dreidimensionalen Bildgebung sind aus dem Stand der Technik bekannt, beispielsweise aus C. Dunsby, "Optically sectioned imaging by oblique plane microscopy," Opt. Express 16, 20306-20316 (2008) oder der WO 2015/109323 A2. Ein Schiefeebenenmikroskop ist beispielsweise ein sogenanntes Lichtblatt-Mikroskop zur Betrachtung verkippter Ebenen. Des Weiteren fallen unter die Bezeichnung "Schiefeebenenmikroskop" noch Oblique Plane illumination Mikroskope (OPM) als auch Swept Confocally-Aligned Planar Excitation (SCAPE) Mikroskope, die beides 3D-Abtastmikroskope sind. Die DE 10 2010 013 223 A1 beschreibt beispielsweise ein Verfahren und eine Anordnung zur Mikroskopie, welche darauf basieren, dass ein sogenanntes virtuelles Lichtblatt durch Scannen eines streifenförmigen Fokusbereiches in der Probe erzeugt wird, sodass sich die Summe aller Streifen zum Lichtblatt zusammensetzt.

Die WO 2013 / 184 758 A2 offenbart Techniken zur rasternden Beleuchtung für schnelle Abbildungen biochemischer planar angeordneter Proben mit hoher Auflösung.

Die Schiefeebenenmikroskope arbeiten mit konfokal angeordneter planarer Anregung bzw. Beleuchtung, die beim SCAPE Mikroskop in einer Schwenkbewegung durch eine Probe hindurch gescannt wird, wohingegen bei der OPM die planare Anregung relativ zur Probe linear gescannt wird, beispielsweise durch eine verschiebbare Linse bzw einer Linearverschiebung der Probe.

Bei beiden stellvertretenden Techniken wird eine einzige Optik hoher numerischer Apertur (NA), zum Beispiel ein Objektiv mit hoher NA, verwendet, um zum einen die planare Beleuchtung einer Beleuchtungsebene zu realisieren und zum anderen über dieselbe Optik das von der beleuchteten Beleuchtungsebene ausgesandte Streulicht bzw. Fluoreszenzlicht aufzufangen und für eine Abbildungsdetektion und Datenbearbeitung zur Verfügung zu stellen.

Dabei werden bei der OPM Bilderstapel erzeugt, die aus zueinander parallelen, bei der SCAPE-Mikroskopie aus zueinander weitestgehend parallelen, jeweils zu aufeinanderfolgenden Zeitpunkten aufgenommenen Abbildungen der Beleuchtungsebenen bestehen. Die einzelnen Beleuchtungsebenen sind gegenüber der optischen Achse des Objektivs, welches der Beleuchtung und der Abbildung der beleuchteten Beleuchtungsebenen dient, verkippt.

Die Position der verschiedenen Beleuchtungsebenen wird variiert, indem ein Scanelement, zum Beispiel ein, bevorzugt motorisierter, Verschiebetisch eine Linse oder Linsenanordnung bzw. die Probe verschiebt (OPM) oder ein Scanspiegel (SCAPE) verkippt wird. Das Scanelement verschiebt bzw. verkippt sowohl einen Beleuchtungsstrahlengang als auch einen Beobachtungsstrahlengang relativ zur untersuchten Probe.

Möchte der Anwender eines Schiefeebenenmikroskops ein Vorschaubild der untersuchten Probe in Echtzeit erhalten, so kann dieses Vorschaubild zur Orientierung in der Probe dadurch erhalten werden, dass lediglich die Abbildung einer einzelnen beleuchteten Beleuchtungsebene in der Probe ausgewertet und wiedergegeben wird, oder aber ein Vorschaubild aus dem gesamten aufgenommenen Bilderstapel erzeugt wird.

Nachteilig bei der ersten Vorgehensweise ist, dass das Vorschaubild gegenüber der optischen Achse des Objektivs verkippt ist, was dem Anwender die Orientierung in der Probe erschwert.

Der Nachteil der zweiten Herangehensweise ist, dass die Vorschaubilder nicht in Echtzeit geliefert werden können und somit eine Bewegung der Probe durch den Anwender nicht instantan nachverfolgt werden kann.

Aufgabe der vorliegenden Erfindung ist es somit, ein Verfahren, ein Mikroskop und eine Bilderzeugungsvorrichtung zur Verfügung zu stellen, die die Erzeugung von Vorschaubildern in einem Schiefeebenenmikroskop in Echtzeit ermöglichen, wobei die in den Vorschaubildern wiedergegebene Ebene parallel zur Grenzfläche der Probe bzw. senkrecht zur optischen Achse der Beobachtungsoptik orientiert sein soll.

Das erfindungsgemäße Verfahren löst diese Aufgabe dadurch, dass es die Verfahrensschritte des Beleuchtens von zu aufeinanderfolgenden Zeitpunkten verschiedener, gegenüber einer optischen Achse einer Beobachtungsoptik verkippter und zueinander beabstandeter Beleuchtungsebenen und des Abbildens auf einem Sensor mit zeilenweise angeordneten photosensitiven Elementen umfasst, und dass dabei jeweils mindestens ein streifenförmiger, in seiner Längserstreckung zeilenparallel orientierter und in einem Ausleseschritt aus lesbarer Auslesebereich des Sensors ausgelesen wird, wobei aus den nacheinander ausgelesenen Auslesebereichen ein Vorschaubild erzeugt wird, das eine in einer senkrecht zur optischen Achse der Beobachtungsoptik liegende Betrachtungsebene wiedergibt.

Das eingangs genannte erfindungsgemäße Schiefeebenenmikroskop löst die obige Aufgabe dadurch, dass es ausgestaltet ist, zu aufeinanderfolgenden Zeitpunkten verschiedene, gegenüber einer optischen Achse einer Beobachtungsoptik verkippte und zueinander beabstandete Beleuchtungsebenen auf einem Sensor des Mikroskops abzubilden, wobei der Sensor zeilenweise angeordnete photosensitive Elemente umfasst, und wobei das Mikroskop einen Bilddatenprozessor mit einer Schnittstelle zur Ausgabe eines Vorschaubildes aufweist, das eine senkrecht zur optischen Achse der Beobachtungsoptik liegende Betrachtungsebene wiedergibt, wobei der Sensor mindestens einen streifenförmigen, in seiner Längserstreckung zeilenparallel orientierten und in einem Ausleseschritt auslesbaren Auslesebereich umfasst und wobei das Vorschaubild aus nacheinander ausgelesenen streifenförmigen Auslesebereichen der Abbildung der nacheinander beleuchteten Beleuchtungsebenen zusammengesetzt ist.

Die eingangs erwähnte erfindungsgemäße Bilderzeugungsvorrichtung für ein Schiefeebenenmikroskop wie zum Beispiel ein 3D-Abtast- oder SCAPE-Mikroskop oder Oblique Plane Mikroskop, welches ausgestaltet ist, zeitlich nacheinander eine Mehrzahl von schräg gegenüber einer optischen Achse einer Beobachtungsoptik verlaufende, voneinander beabstandete Beleuchtungsebenen zu erzeugen und auf einen Sensor abzubilden, löst die obige Aufgabe dadurch, dass die Bilderzeugungsvorrichtung den zeilenweise angeordnete photosensitive Elemente umfassenden Sensor, eine Bilddatenauslesevorrichtung mit einem Ausgang und einen Bilddatenprozessor umfasst, wobei an dem Ausgang der Bildauslesevorrichtung mindestens ein streifenförmiger, entlang seiner Längserstreckung zeilenparallel orientierter ausgelesener Auslesebereich der Abbildung der jeweiligen Beleuchtungsebene zur Verfügung gestellt wird, und wobei durch den Bilddatenprozessoraus den ausgelesenen Auslesebereichen ein Vorschaubild erzeugt wird, das eine in einer senkrecht zur optischen Achse der Beobachtungsoptik liegende Betrachtungsebene wiedergibt.

Das erfindungsgemäße Verfahren und Schiefeebenenmikroskop sowie und die erfindungsgemäße Bilderzeugungsvorrichtung haben den Vorteil, dass ein Vorschaubild der zu untersuchenden Probe zur Verfügung gestellt wird, welches senkrecht zur optischen Achse der Beobachtungsoptik ausgerichtet ist. Eine solche Ausrichtung entspricht der für den Anwender gewohnten Ausrichtung von Mikroskopiebildern und erleichtert somit die Orientierung in der Probe erheblich. Ferner haben das erfindungsgemäße Verfahren und das erfindungsgemäße Mikroskop sowie die Bilderzeugungsvorrichtung den Vorteil, dass das Vorschaubild in Echtzeit generiert und angezeigt werden kann, sodass eine rasche Ausrichtung der Probe möglich ist. Dies ist deswegen möglich, weil erfindungsgemäß nicht wie im Stand der Technik der gesamte Flächensensor ausgelesen wird, sondern nur der wenigstens eine Auslesebereich, der in einem Ausleseschritt ausgelesen werden kann. Ein solcher Auslesebereich wird durch den verwendeten Sensor und dessen kleinste in einem Ausleseschritt auszulesende Einheit.

Die Orientierung des Auslesebereiches stellt sicher, dass dieser für das Vorschaubild auch ausgelesen werden kann. Der damit erreichbare Geschwindigkeitsvorteil ermöglicht eine Erzeugung des Vorschaubildes in Echtzeit.

Die Erzeugung des Vorschaubildes in Echtzeit hat zudem den Vorteil, dass im Vergleich zur Erzeugung eines Vorschaubildes aus dem kompletten Bilderstapel der sogenannte Rolling-Shutter-Effekt minimiert bzw. unterdrückt werden kann. Dieser kann auftreten, wenn sich ein Objekt insbesondere senkrecht zur Bewegungsrichtung eines sich bewegenden Shutters, d.h. einer sich bewegenden Blende (dies entspricht zum Beispiel in einem Schiefeebenenmikroskop der mittels des Scanelementes bewegten Beleuchtungsebene) bewegt wird oder ist, und kann zu einer Verzerrung des aufgenommenen Bildes führen.

Die benötigte Zeit zum Auslesen eines Flächensensors skaliert linearer mit der Anzahl der auszulesenden Zeilen, wohingegen die Anzahl der auszulesenden Spalten die Auslesezeit nicht beeinflusst. Durch das Auslesen von jeweils nur mindestens einem streifenförmigen, entlang seiner Längserstreckung zeilenparallel orientierten Auslesebereiches wird im Vergleich zum Auslesen kompletter Spalten ein Geschwindigkeitsvorteil erreicht, der gewährleistet, dass ein Vorschaubild einer untersuchten Probe mit schneller Eigendynamik keine solche Verzerrung aufweist.

Die erfindungsgemäße Lösung kann durch die folgenden jeweils für sich vorteilhaften und beliebig miteinander kombinierbaren Ausgestaltungen weiter verbessert werden.

Nach dem erfindungsgemäßen Verfahren wird beim Sensor, der ein Zeilensensor oder bereichsweise auszulesender Flächensensor sein kann, bevorzugt jeweils wenigstens ein Auslesebereich ausgelesen. Der Auslesebereich ist somit als die kleinste, in einem Ausleseschritt auslesbare Einheit des entsprechenden Sensors zu verstehen. Der Auslesebereich kann bei einem Zeilensensor die komplette Zeile, bei einem abschnittsweise auszulesenden Flächensensor einen mehrere Zeilen umfassenden Bereich umfassen. Mit jedem Ausleseschritt kann somit bevorzugt mindestens eine komplette Zeile des entsprechenden Sensors, genauer gesagt der durch das Abbild der beleuchteten Beleuchtungsebenen generierten Ladungsverteilung, ausgelesen und beispielsweise an einen Konverter zur weiteren Verarbeitung weitergegeben werden kann.

Der Auslesebereich kann als ein aus den unmittelbar neben- und aneinanderliegenden photosensitiven Elementen bestehendes Datenfeld angesehen werden Das Datenfeld eines

Zeilensensor kann die gesamte Zeile oder mehrere zusammenhängende photosensitive Elemente umfassen, das Datenfeld eines bereichsweise auszulesenden Flächensensors kann eine oder mehrere Zeilen umfassen und bevorzugt eine Vielzahl von Spalten abschnittsweise überdecken.

Die streifenförmigen Auslesebereiche sind dabei in ihrer Längserstreckung bevorzugt zeilenparallel orientiert, d.h., dass diese eine zweidimensionale Geometrie in Form eines Streifens aufweisen, wobei der Streifen beispielsweise parallel zur Zeile des Zeilensensors bzw. parallel zu den Zeilen des Flächensensors orientiert ist

Das erfindungsgemäße Verfahren basiert auf der Abbildung der zu aufeinanderfolgenden Zeitpunkten auf einem Sensor abgebildeten Beleuchtungsebenen. Jede der Beleuchtungsebenen wird bevorzugt gemäß dem optischen Aufbau des entsprechenden Schiefeebenenmikroskops durch eine geeignete Beleuchtung beleuchtet, durch die Beobachtungsoptik abgebildet und mittels einer Aufrichteeinheit plan, d.h. in einer geraden Ebene auf dem Flächensensor abgebildet.

Ebenso ist es möglich, dass der Sensor ein separater Sensor ist, auf welchem die Beleuchtungsebenen ohne eine Aufrichtung eines verkippten Zwischenbildes abgebildet werden können. Hierfür kann beispielsweise ein Strahlteiler einen Teil des entlang eines Beobachtungsstranges propagierenden Lichtes auf den separaten Sensor umlenken. Dieser Strahlteiler bzw. der Sensor können in den Beobachtungsstrahlengang einschwenkbar ausgestaltet sein. Im erfindungsgemäßen Verfahren, Mikroskop und der erfindungsgemäßen Bilderzeugungsvorrichtung kann somit ein Vorschaustreifen auf den Streifen einer Detektorebene projiziert werden.

Ein Scanelement, zum Beispiel ein Scanspiegel oder ein Verschiebetisch kann verwendet werden, um jeweils zur optischen Achse der Beobachtungsoptik verkippte und voneinander beabstandete unterschiedliche Beleuchtungsebenen zu aufeinanderfolgenden Zeitpunkten zu beleuchten. Bevorzugt wird jede der beleuchteten Beleuchtungsebenen auf dem Sensor abgebildet.

Die jeweils abgebildete Beleuchtungsebene generiert, entsprechend der Intensitätsverteilung des Abbildes, eine Ladungsverteilung auf der aus insbesondere einer Vielzahl von photosensitiven Elementen, zum Beispiel Pixeln bestehenden Fläche des Sensors. Diese Ladungsverteilung muss nach der Erfindung jedoch nicht gänzlich ausgelesen werden, sondern es wird lediglich die Ladungsverteilung des Auslesebereiches aus dem Sensor ausgelesen. Der ausgelesene Auslesebereich entspricht dabei der Intensitätsverteilung eines streifenförmigen Ausschnittes des Abbildes der beleuchteten Beleuchtungsebene.

In einer weiteren Ausgestaltung des erfindungsgemäßen Verfahrens wird ein Vorschaustreifen jeder der zu aufeinanderfolgenden Zeitpunkten generierten Beleuchtungsebenen als Streifenabbild auf dem Sensor abgebildet, wobei das Streifenabbild mindestens einen in einem Ausleseschritt auslesbaren Auslesebereich umfasst. Das Streifenabbild kann insbesondere einer ganzzahligen Anzahl von Auslesebereichen entsprechen.

Nach dem erfindungsgemäßen Verfahren, Schiefeebenenmikroskop und der erfindungsgemäßen Bilderzeugungsvorrichtung wird zur Erzeugung des Vorschaubildes aus den zu unterschiedlichen Zeitpunkten beleuchteten Beleuchtungsebenen jeweils nur ein Vorschaustreifen der Beleuchtungsebene genutzt. Der jeweilige Vorschaustreifen wird nicht optisch selektiert, d.h. die gesamte Beleuchtungsebene ist weiterhin beleuchtet, sondern über die Auswahl, insbesondere die Größe des Streifenabbildes definiert.

Während der Beleuchtung einer Beleuchtungsebene wird lediglich der vom Streifenabbild überdeckte Bereich des Sensors ausgelesen, wofür gemäß der Anzahl der Auslesebereiche des Streifenabbildes eine entsprechende Anzahl an Ausleseschritten notwendig ist.

In einer weiteren Ausgestaltung des Verfahrens wird der mindestens eine Auslesebereich jeweils zu Beginn eines Auslesevorganges aus dem Sensor ausgelesen. Dies hat den Vorteil, dass der Auslesevorgang nach erfolgtem Auslesen des Streifenabbildes gestoppt bzw. abgebrochen werden kann, was zu einer Zeitersparnis führt. Umfasst ein Flächensensor beispielsweise eine Anzahl von etwa 1000 Zeilen mit einer beliebigen Anzahl an photosensitiven Pixeln und umfasst ein Auslesebereich eine komplette Zeile, wobei das Streifenabbild lediglich 10 Pixel umfasst, so kann die Auslesegeschwindigkeit um ca. den Faktor 100 vergrößert werden, wenn nur die ersten 10 Zeilen ausgelesen werden müssen. Im Allgemeinen steigt die Auslesegeschwindigkeit im Vergleich zum Auslesen des gesamten Sensors nicht, wenn von den 1000 Zeilen auch bzw. nur die zehn letzten Zeilen des Sensors ausgelesen werden. In anderen Ausgestaltungen kann der Auslesebereich mehrere Zeilen umfassen, sodass zum Auslesen der beispielhaft genannten zehn Zeilen weniger als zehn Ausleseschritte notwendig sein können. Die Anzahl der Ausleseschritt ist abhängig von der Größe der kleinsten in einem Ausleseschritt auslesbaren Einheit des Sensors

Bevorzugt weist der Flächensensor eine zweidimensionale Struktur aus photosensitiven Pixeln, zum Beispiel Photodioden, auf, die mittels eines Zeilen- und Spaltenparameters adressiert werden können. Die Flächensensoren weisen bevorzugt eine Ausleserichtung auf, die entlang der Spalten des Flächensensors orientiert und von einem Ausleseende zu einem Ausleseanfang gerichtet ist. Eine derart definierte Ausleserichtung ist an die Richtung der Verschiebung der in den einzelnen photosensitiven Elementen generierten Ladungen angelehnt, sodass diese Ausleserichtung als physikalische Ausleserichtung verstanden werden kann. Mit anderen Worten wird ein solcher Flächensensor beginnend mit sich am Ausleseanfang befindlichen Zeilen ausgelesen, wobei die Zeilen des Flächensensors, welche sich am Ausleseende befinden, erst am Ende des Auslesevorganges ausgelesen werden.

Da ein Zeilensensor lediglich eine Zeile aus photosensitiven Pixeln umfasst, nutzt dieser nur den Spaltenparameter zum Adressieren der photosensitiven Pixel. Bei einem solchen Zeilensensor wird im Allgemeinen die generierte Ladungsverteilung der Zeile in einem Ausleseschritt vollständig ausgelesen.

Der Sensor weist bevorzugt einen CCD-Sensor und/oder einen CMOS-Sensor auf. Insbesondere kann der Sensor ein Flächensensor sein.

Im erfindungsgemäßen Verfahren kann ein Vorschaustreifen jeder der Beleuchtungsebenen im Wesentlichen zeilenparallel orientiert abgebildet werden, wobei der Vorschaustreifen bevorzugt in seiner Quererstreckung von der jeweiligen Beobachtungsebene im Wesentlichen symmetrisch geschnitten werden kann. Dies hat den Vorteil, dass die ausgelesenen Streifen der Ladungsverteilung des Flächensensors einem Ausschnitt der beleuchteten Beleuchtungsebene entsprechen, welcher in unmittelbarer Nähe der senkrecht zur optischen Achse der Beobachtungsoptik liegenden Betrachtungsebene angeordnet ist.

In einer weiteren Ausgestaltung des erfindungsgemäßen Verfahrens werden streifenförmige Ausschnitte der beleuchteten Beleuchtungsebene, die entlang einer Beleuchtungsrichtung verlaufen und somit gegenüber der optischen Achse verkippt sind, entlang der Spalten des Flächensensors abgebildet. Dies hat den Vorteil, dass Bereiche der Probe, die entlang bzw. entgegen der optischen Achse der Beobachtungsoptik von der Vorschauebene entfernt gelegen sind, in Bereichen des Zeilensensors oder des bereichsweise auszulesenden Flächensensors abgebildet sind, die nicht ausgelesen werden.

In einer weiteren Ausgestaltung des erfindungsgemäßen Verfahrens wird der Vorschaustreifen jeder der Beleuchtungsebenen auf dem Ausleseanfang des Sensors abgebildet. Dies hat den Vorteil, dass die für das Vorschaubild relevanten Bildinformationen in einem Bereich des Sensors abgebildet werden, welcher zu Beginn des Auslesevorganges ausgelesen wird und somit die Erzeugung des Vorschaubildes beschleunigt. Der Vorschaustreifen ist dabei als ein Abschnitt der jeweiligen beleuchteten Beleuchtungsebene zu verstehen. Der Vorschaustreifen ist im Wesentlichen durch die Anzahl der am Ausleseanfang des Flächensensors betrachteten Zeilen definiert.

Da bei einem Zeilensensor lediglich die vorhandene Zeile ausgelesen werden kann, entspricht diese dem Ausleseanfang.

Werden beispielsweise die ersten 10 Zeilen des Ausleseanfangs eines Flächensensors betrachtet, und haben diese beispielsweise eine Größe von 5 bis 6 µm, so hat bei einer Vergrößerung von etwa 10- bis 20-fach durch die Beobachtungsoptik der Vorschaustreifen eine Breite von etwa 3 bis 6 µm. Der Vorschaustreifen wird allerdings nicht optisch selektiert, da im Wesentlichen die komplette Beleuchtungsebene auf dem Flächensensor abgebildet wird, sondern aufgrund des Auslesens einer begrenzten Anzahl von Zeilen des Flächensensors selektiert.

Da sich das Abbild des Vorschaustreifens, d.h. das Streifenabbild bevorzugt am Ausleseanfang des Sensors befindet und zudem zeilenparallel orientiert ist, kann somit die für das Vorschaubild relevante Bildinformation sehr schnell zu Beginn des Auslesevorganges ausgelesen werden, ohne dass der komplette Sensor ausgelesen werden muss.

Der Ausleseanfang des Sensors kann insbesondere eine Zeile desselben. Beim Starten des Auslesevorganges kann somit bevorzugt diejenige komplette Zeile des Sensors bei einem Ausleseschritt ausgelesen, welche am nächsten zum Ausleseanfang liegt. Folglich wird die Bildinformation, die am Ausleseanfang in Form einer der Helligkeitsverteilung entsprechenden Ladungsträgerverteilung vorliegt, beim Auslesen des Sensors zuerst ausgelesen.

In einer weiteren Ausgestaltung des erfindungsgemäßen Verfahrens erstreckt sich der Streifen über wenigstens zwei separat auslesbare Sensoren. Dies hat den Vorteil, dass Bildinformationen zeitgleich aus den wenigstens zwei separaten Sensoren ausgelesen werden können, was die Auslesezeit verringert. Bevorzugt sind die wenigstens zwei separaten Sensoren als abschnittsweise auszulesende Flächensensoren ausgestaltet.

In einer weiteren Ausgestaltung des erfindungsgemäßen Verfahrens werden die nacheinander ausgelesenen Auslesebereiche jedes Streifenabbildes in Abhängigkeit von einem Verkippungswinkel der jeweiligen Beleuchtungsebene zur optischen Achse der Beobachtungsoptik und/oder in Abhängigkeit von einem Abstand zwischen zu unterschiedlichen Zeitpunkten beleuchteten Beleuchtungsebenen entschert und/oder gemittelt und damit das Vorschaubild erzeugt. Beim Entscheren wird die parallelogrammförmige, verschobene Darstellung eines ursprünglich rechteckigen Bereichs entzerrt, sodass wieder die originale, rechteckige Form vorliegt.

Die zu unterschiedlichen Zeitpunkten ausgelesenen Auslesebereiche entsprechen bevorzugt einem Stapel von Vorschaustreifen, wobei die einzelnen Vorschaustreifen jeweils voneinander beabstandet sind und zur optischen Achse der Beobachtungsoptik verkippt sind. Die Vielzahl der ausgelesenen Streifen entspricht einem die Beobachtungsebene einschließenden Volumen, welches sich im Wesentlichen senkrecht zur optischen Achse der Beobachtungsoptik erstreckt und entlang der optischen Achse eine geringe Ausdehnung aufweist, die im Bereich weniger Mikrometer liegen kann.

Um ein entzerrtes zweidimensionales Abbild der Beobachtungsebene zu erhalten, ist es somit notwendig, die sich teilweise überlappenden Vorschaustreifen, insbesondere das sich aus diesen zusammensetzende Volumen zu entscheren und entlang der optischen Achse zu mitteln. Dadurch wird eine virtuelle Projektion des Volumens entlang der optischen Achse des Objektivs der Beobachtungsoptik generiert.

In einer weiteren Ausgestaltung des erfindungsgemäßen Verfahrens wird der Sensor verschoben, um die Lage der Abbildung der Beleuchtungsebene relativ zum Sensor zu ändern. Durch die Bewegung des Sensors wird bei Beibehaltung des vom Sensor ausgelesenen Auslesebereiches lediglich ein anderer Ausschnitt des Abbildes der Beleuchtungsebene, d.h. ein anderes Streifenabbild ausgelesen, genauer gesagt wird die Ladungsverteilung des entsprechenden Auslesebereiches ausgelesen.

Erfolgt die Verschiebung des Sensors senkrecht zur zeilenparallelen Richtung, so kann die wiedergegebene Betrachtungsebene entlang der optischen Achse der Beobachtungsoptik verschoben werden. Mit einer Bewegung des Sensors entlang der zeilenparallelen Richtung kann dahingegen der Bildausschnitt der Betrachtungsebene bei gleichbleibender Entfernung zur Beobachtungsoptik variiert werden.

Die Verschiebung des Sensors kann bevorzugt in seiner Ebene erfolgen. Mit einer Bewegung des Sensors entlang bzw. entgegen seines Normalenvektors ist eine Scharfstellung der Abbildung der jeweiligen Beleuchtungsebene, das heißt die Scharfstellung des Streifenabbildes auf dem Sensor möglich.

Des Weiteren ist es ebenso möglich, die Lage der Betrachtungsebene, welche durch das Vorschaubild wiedergegeben wird, durch eine Verschiebung der zu untersuchenden Probe gegenüber dem Mikroskop zu variieren.

Das eingangs erwähnte erfindungsgemäße Schiefeebenenmikroskop kann gemäß einer vorteilhaften Ausgestaltung ferner eine Beleuchtungseinrichtung zur Erzeugung einer in einer Beleuchtungsebene liegenden Ebenenbeleuchtung aufweisen. Mit dieser Beleuchtungseinrichtung und einem Scanelement, zum Beispiel einem Scanspiegel oder Verschiebetisch, können im Mikroskop zu aufeinanderfolgenden Zeitpunkten verschiedene Beleuchtungsebenen beleuchtet werden. Mit anderen Worten werden zu unterschiedlichen Zeiten verschiedene Bereiche einer Probe durch die Beleuchtungseinrichtung beleuchtet, wobei die Bereiche zweidimensional, also flächig beleuchtet werden. Aufgrund der Form der beleuchteten Beleuchtungsebene kann von einem Lichtblatt gesprochen werden, wobei sich die Lage des jeweiligen Lichtblattes in der Probe zeitlich, insbesondere in Abhängigkeit vom Scanelement, ändert.

Die jeweiligen Beleuchtungsebenen werden mittels der Beleuchtungseinrichtung durch die Beobachtungsoptik hindurch beleuchtet, wobei die Beobachtungsoptik zeitgleich das von der Beleuchtungsebene ausgesandte Streulicht bzw. Fluoreszenzlicht auf dem Sensor abbildet.

Der Bilddatenprozessor kann eine Bilddatenausleseeinheit und einen Speicher zum Zwischenspeichern der ausgelesenen Ladungsverteilungen des Sensors aufweisen.

Die Beleuchtungsoptik des Schiefeebenenmikroskops bildet das Streu- oder Fluoreszenzlicht einer zur optischen Achse der Beobachtungsoptik verkippten Beleuchtungsebene auf dem Sensor ab, wobei der Sensor ein Zeilensensor oder bereichsweise auszulesenden Flächensensor sein kann.

Ein senkrecht zur Beleuchtungsrichtung der Beleuchtungsebene orientierter Vorschaustreifen kann als zeilenparallel orientierter Streifen abgebildet sein. Wie bereits oben beschrieben wird der Vorschaustreifen durch das aus dem Sensor ausgelesene, mindestens einen Auslesebereich umfassende Streifenabbild definiert.

In einer weiteren Ausgestaltung des erfindungsgemäßen Schiefeebenenmikroskops weist der Flächensensor wenigstens ein Feld photosensitiver Elemente auf, die mindestens zwei Auslesebereiche ausbilden, die seriell in einer Ausleserichtung auszulesen sind, wobei wenigstens ein Auslesebereich an einem Ausleseanfang des Sensors liegt und wobei die Abbildung eines Vorschaustreifens senkrecht zur Ausleserichtung ausgerichtet ist. Die Abbildung des Vorschaustreifens senkrecht zur Ausleserichtung hat den Vorteil, dass die durch den Vorschaustreifen hervorgerufene Ladungsverteilung im Sensor, d.h. die Ladungsverteilung im Feld der photosensitiven Elemente, entlang der schmaleren Ausdehnung des Abbildes des Vorschaustreifens bzw. des Streifenabbildes ausgelesen werden kann. Im Vergleich zur Orientierung des Streifenabbildes entlang der Ausleserichtung wird der Auslesevorgang somit deutlich beschleunigt. Die Ausleserichtung ist als physikalische Ausleserichtung vom Ausleseende zum Ausleseanfang orientiert und entspricht der Verschiebungsrichtung der im jeweiligen Sensor generierten Ladungsverteilung.

Auch der Zeilensensor weist ein Feld von seriell in einer Ausleserichtung auszulesenden photosensitiven Elementen auf, wobei dieses jedoch eindimensional ist. Da ein Zeilensensor lediglich eine Zeile umfasst, die in einem einzelnen Ausleseschritt ausgelesen wird, ist es nicht möglich für einen solchen Zeilensensor eine Ausleserichtung anzugeben.

Da die photosensitiven Elemente des Zeilensensors eine Ausdehnung senkrecht zur Zeile aufweisen, hat die auf dem Zeilensensor abgebildete Abbildung des Vorschaustreifens eine Breite eines photosensitiven Elementes und die Länge der Zeile des Zeilensensor.

Bevorzugt ist der Vorschaustreifen auf dem Ausleseanfang des Sensors abgebildet, sodass die durch diesen hervorgerufene Ladungsverteilung im Sensor zu Beginn des Auslesevorganges ausgelesen werden kann, ohne dass ein vollständiger Auslesevorgang durchgeführt werden muss.

In einer weiteren Ausgestaltung des erfindungsgemäßen Schiefeebenenmikroskops sind mindestens zwei Sensoren vorgesehen, deren Ausleseanfänge sich gegenüberliegend angeordnet und im Wesentlichen parallel zueinander ausgerichtet sind. Eine derartige Anordnung von zwei Sensoren, insbesondere Flächensensoren hat den Vorteil, dass der Auslesevorgang im Wesentlichen um den Faktor 2 beschleunigt werden kann. Die mehreren Flächensensoren können baulich vereint und insbesondere als abschnittsweise auszulesende Flächensensoren ausgestaltet sein. Ebenso können 3, 4 oder mehr Flächensensoren vorhanden sein, deren Ausleseanfänge entlang der Ausrichtung der Zeilen aneinanderliegen bzw. sich gegenüberliegen.

In einer weiteren Ausgestaltung des erfindungsgemäßen Schiefeebenenmikroskops ist der Vorschaustreifen auf wenigstens einem Ausleseanfang abgebildet. Dies hat den Vorteil, dass die vom Abbild des Vorschaustreifens generierte Ladungsverteilung des Sensors ausgelesen werden kann, ohne dass dieser vollständig ausgelesen werden muss.

Bevorzugt ist der Vorschaustreifen symmetrisch auf den Ausleseanfängen der mindestens zwei oder mehr Sensoren, insbesondere Flächensensor abgebildet, sodass der Vorschaustreifen auf den Sensoren, insbesondere auf deren Ausleseanfängen abgebildet und eine der Intensität des Vorschaustreifens entsprechende Ladungsverteilung generiert wird. Die Abbildung des Vorschaustreifens entspricht dabei dem Streifenabbild, welches mindestens einen Auslesebereich umfasst.

Ferner kann jeder der mindestens zwei Sensoren ein separates Auslesemodul aufweisen, sodass die Sensoren entlang ihrer jeweiligen Ausleserichtung zeitgleich zueinander ausgelesen werden können.

Die mindestens zwei Sensoren können zeilenförmige Ausleseanfänge aufweisen, wobei ein auf die mindestens zwei Sensoren, insbesondere Flächensensoren abgebildeter Vorschaustreifen bevorzugt zeilenparallel orientiert ist.

Wird auf das obige Beispiel zurückgegriffen, in welchem zehn Zeilen eines einzelnen Flächensensors zur Erzeugung eines Vorschaubildes ausgelesen wurden, so können unter Beibehaltung der Eigenschaften des Vorschaubildes in der zwei Flächensensoren aufweisenden Ausgestaltung des Mikroskops jeweils fünf an dem jeweiligen Ausleseanfang des Flächensensors liegende Zeilen ausgelesen werden, wobei durch das parallele Auslesen der jeweils fünf Zeilen beider Flächensensoren die dafür benötigte Zeit im Wesentlichen halbiert wird.

In einer weiteren Ausgestaltung des erfindungsgemäßen Schiefeebenenmikroskops ist der mindestens eine Sensor entlang der Längserstreckung des mindestens einen Auslesebereiches und/oder entlang bzw. entgegen seiner Ausleserichtung verschiebbar angeordnet. Dies hat den Vorteil, dass die senkrecht zur optischen Achse der Beobachtungsoptik liegende Betrachtungsebene entlang der optischen Achse verschoben werden kann, ohne die zu untersuchende Probe zu verschieben.

Der Sensor kann insbesondere senkrecht zu einer zeilenparallelen Richtung in der Abbildungsebene des Abbildes der Beleuchtungsebene verschiebbar sein.

Mittels einer Verschiebung des Sensors entlang bzw. entgegen seiner Ausleserichtung kann im erfindungsgemäßen Mikroskop,. Verfahren bzw. Bilderzeugungsvorrichtung der Ausschnitt der Abbildung der jeweiligen Beleuchtungsebene variiert werden, welcher ausgelesen wird. Da der Ausschnitt durch die Bewegung des jeweiligen Sensors für alle zu unterschiedlichen Zeitpunkten beleuchteten Beleuchtungsebenen identisch ist, wird die Beobachtungsebene lediglich parallel entlang der optischen Achse der Beobachtungsoptik verschoben.

Ferner kann der mindestens eine Sensor auch parallel zur zeilenparallelen Richtung bzw. senkrecht zu seiner Ausleserichtung verschiebbar angeordnet sein. Eine solche Verschiebung kann dafür genutzt werden, den betrachteten Bildbereich zu verschieben.

Eine Verschiebung des mindestens einen Sensors entlang dessen Normalenvektor kann vorgesehen sein, um die Fokussierung der Abbildung der Beleuchtungsebene auf dem Sensor nachzuregeln.

In einer weiteren Ausgestaltung des erfindungsgemäßen Schiefeebenenmikroskops ist der mindestens eine Sensor um seinen Normalenvektor in mindestens zwei im Wesentlichen senkrecht zueinander orientierte Drehpositionen drehbar angeordnet. Dies hat den Vorteil, dass mit dem Mikroskop entweder ein Vorschaubild erzeugt wird, das die in der senkrecht zur optischen Achse der Beobachtungsoptik liegende Betrachtungsebene wiedergibt, oder aber ein Vorschaubild erzeugt wird, das eine durch die Ausbreitungsrichtung der Beleuchtung der Beleuchtungsebene und die optische Achse aufgespannte vertikale Betrachtungsebene wiedergegeben werden kann. Somit können auf einfache Weise sowohl horizontale als auch vertikale Schnittbilder einer zu untersuchenden Probe in Echtzeit generiert werden.

Ein Zeilensensor wird zwar als eindimensionaler Sensor betrachtet, weist aufgrund der flächigen Ausdehnung seiner photosensitiven Elemente allerdings eine Oberfläche auf, zu der ein Normalenvektor definiert werden kann

In einer weiteren Ausgestaltung des erfindungsgemäßen Schiefeebenenmikroskops umfasst der Bilddatenprozessor eine Entscher- und/oder Mittelungsvorrichtung, welche die zu aufeinanderfolgenden Zeitpunkten von einer Bilddatenauslesevorrichtung ausgelesenen streifenförmigen Auslesebereiche des jeweiligen Streifenabbildes in Abhängigkeit von einem Verkippungswinkel der jeweiligen Beleuchtungsebene zur optischen Achse der Beobachtungsoptik und/oder in Abhängigkeit von einem Abstand zwischen zeitlich nacheinander beleuchteten Beleuchtungsebenen entschert und/oder mittelt und das Vorschaubild erzeugt. Wie bereits oben im Zuge des Verfahrens beschrieben hat diese Ausgestaltung den Vorteil, dass ein sich aus verkippten und/oder zueinander beabstandeten Streifen zusammensetzendes Vorschauvolumen ohne Deformation, zum Beispiel Verzerrung, auf ein zweidimensionales Vorschaubild projiziert werden kann.

Die Entscher- und/oder Mittelungsvorrichtung kann mehrere Unterbaugruppen umfassen, die eine geeignete Mittelung vornehmen. Diese kann zum Beispiel durch eine Mittelwertvorrichtung oder einen Integrator erfolgen.

Die eingangs beschriebene erfindungsgemäße Bilderzeugungsvorrichtung kann als zusätzliches Bauteil bzw. zusätzliche Baugruppe für ein Mikroskop mit verkippter Beleuchtungsebene verstanden werden. Diese kann beispielsweise als Zusatz- oder Upgrade-Modul in ein bestehendes Mikroskop mit verkippter Beleuchtungsebene integriert werden. Die Bilderzeugungsvorrichtung liest lediglich das Streifenabbild aus, welches mindestens einen Auslesebereich umfasst, wobei dieses einem in der jeweiligen Beleuchtungsebene liegenden und senkrecht zur Beleuchtungsrichtung der Beleuchtungsebene orientierten Vorschaustreifen entspricht. Das ausgelesene Streifenabbild kann mit erheblich höherer Geschwindigkeit ausgelesen und zur Verfügung gestellt werden als dies zum Beispiel mit einem vollständig ausgelesenen Sensor der Fall ist.

Im Folgenden wird die Erfindung anhand der in den beigefügten Figuren dargestellten unterschiedlichen Ausgestaltungen der Erfindung näher verdeutlicht. Technische Merkmale der Ausgestaltungen können dabei beliebig kombiniert und/oder weggelassen werden, sofern es nicht auf den mit dem weggelassenen technischen Merkmal erzeugten technischen Effekt ankommt. Gleiche technische Merkmale bzw. technische Merkmale mit gleicher technischer Wirkung werden mit dem gleichen Bezugszeichen versehen.

Es zeigen:
- Fig. 1: eine schematische Darstellung eines Schiefeebenenmikroskop;
- Fig. 2: eine Detaildarstellung von drei Beleuchtungsebenen;
- Fig. 3: eine Detaildarstellung von drei Vorschaustreifen;
- Fig. 4: eine Detaildarstellung einer Vielzahl von Beleuchtungsebenen;
- Fig. 5: eine Detaildarstellung einer Vielzahl von Vorschaustreifen;
- Fig. 6: eine schematische Draufsicht auf eine erste Ausgestaltung eines Flächensensors; und
- Fig. 7: eine schematische Draufsicht auf eine zweite Ausgestaltung eines Flächensensors.

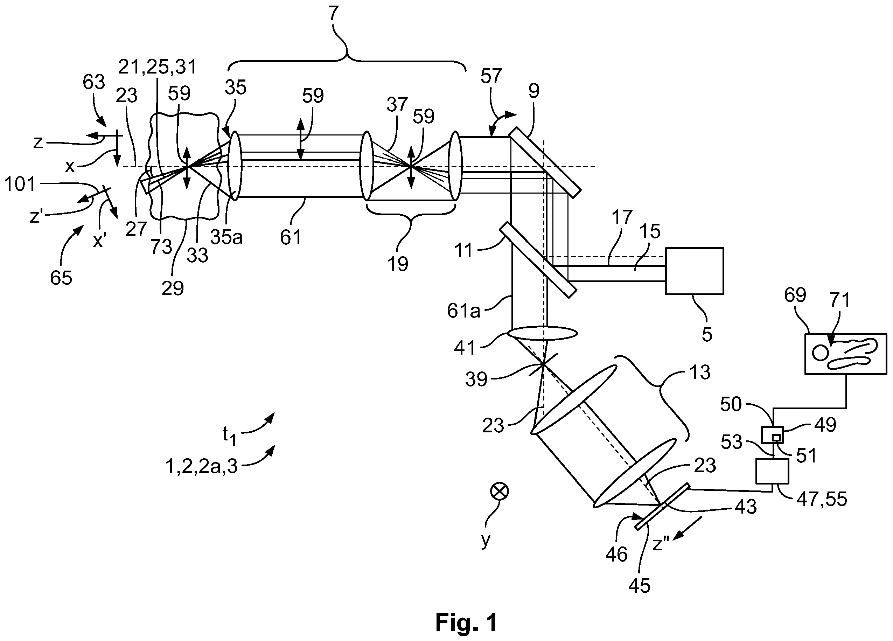

In Fig. 1 ist eine schematische Ansicht eines als 3D-Abtastmikroskop 1 ausgestalteten Mikroskops 2, insbesondere eines SCAPE-Mikroskops 3 gezeigt. Dieses weist eine Beleuchtungseinrichtung 5, eine Beobachtungsoptik 7, einen Scanspiegel 9, einen dichroitischen Spiegel 11 und eine Abbildungsoptik 13 auf. Das gezeigte SCAPE-Mikroskop 3 ist als eine spezielle Ausgestaltung eines Schiefeebenenmikroskop 2a zu verstehen.

Im Folgenden wird die vorliegende Erfindung anhand eines SCAPE- Mikroskops 3 beschrieben. Diese Beschreibung beschränkt die vorliegende Erfindung explizit nicht auf SCAPE- Mikroskope 3, sondern bezieht sich auf jegliche Art von Schiefeebenenmikroskop 2a, wobei die Erfindung lediglich stellvertretend anhand eines SCAPE- Mikroskops 3 beschrieben wird.

Die Beleuchtungseinrichtung 5 emittiert Licht 15, welches entlang eines Beleuchtungsstrahlenganges 17 verläuft und am dichroitischen Spiegel 11 umgelenkt wird. Vom dichroitischen Spiegel 11 verläuft der Beleuchtungsstrahlengang 17 weiter zum Scanspiegel 9, welcher das Licht 15 des Beleuchtungsstrahlenganges 17 in Richtung eines Teleskops 19 umgelenkt, welches zur Vergrößerung dient, worauf im Folgenden eingegangen wird.

Der Beleuchtungsstrahlengang 17 weist beim Verlassen der Beobachtungsoptik 7 eine Konvergenz auf und wird von der Beobachtungsoptik 7 in einem Fokusbereich 21 fokussiert. Der Beleuchtungsstrahlengang 17 wird nicht-paraxial in das Teleskop 19 eingespeist und verläuft auch innerhalb der Beobachtungsoptik 7 nicht-paraxial weiter. Dies hat zur Folge, dass der Fokusbereich 21, der in Form einer Linie dargestellt ist, gegen eine optische Achse 23 der Beobachtungsoptik 7 verkippt ist.

Im in Fig. 1 gezeigten SCAPE-Mikroskop 3 ist der Fokusbereich 21 zweidimensional, das heißt, dass sich dieser in die Zeichenebene hinein bzw. weiter aus dieser heraus erstreckt und ein Lichtblatt 25 herausbildet. Das Lichtblatt 25 ist in einem Verkippungswinkel 27 zur optischen Achse 23 verkippt und befindet sich in einer schematisch dargestellten Probe 29.

Das Lichtblatt 25 bildet somit eine beleuchtete Beleuchtungsebenen 31 heraus, von welcher ausgehend Streu- oder Fluoreszenzlicht 33 in eine durch eine Frontlinse 35a definierte Pupille 35 der Beobachtungsoptik 7 fällt.

Das Streu- oder Fluoreszenzlicht 33 tritt durch die Beobachtungsoptik 7 hindurch und erzeugt im Teleskop 19 ein erstes Zwischenbild 37, welches vom Teleskop 19 und einer weiteren Linse 41 als zweites Zwischenbild 39 nach der weiteren Linse 41 abgebildet wird.

Sowohl das erste 37 als auch das zweite Zwischenbild 39 sind in Bezug auf die jeweilige optische Achse der abbildenden Optik gekippt.

Die Fig. 1 zeigt ferner, dass die Abbildungsoptik 13 gegenüber der optischen Achse 23 der weiteren Linse 41 (die weitere Linse 41 kann als optisches Element der Beobachtungsoptik 7 angesehen werden) verkippt ist, sodass die Abbildungsoptik 13 das zweite Zwischenbild 39 der Beleuchtungsebene 31 in einer Fokusebene 43 fokussiert, welche senkrecht zur optischen Achse 23 die Abbildungsoptik 13 orientiert ist.

In der Fokusebene 43 wird die Beleuchtungsebene 31 plan auf wenigstens einem Zeilensensor 44 (nicht gezeigt) oder einem Flächensensor 45 abgebildet. Der Flächensensor 45 ist beispielsweise ein zweidimensionaler CCD- oder CMOS-Sensor. Auf dem Flächensensor 45 liegt somit eine Abbildung 46 der Beleuchtungsebene 31 vor.

Die Fig. 1 zeigt ferner eine schematisch dargestellte Bilddatenauslesevorrichtung 47 und einen Bilddatenprozessor 49, der mit der Bilddatenauslesevorrichtung 47 verbunden ist, eine Entscher- und/oder Mittelungsvorrichtung 51 umfasst und eine Schnittstelle 50 zur Verfügung stellt.

Die Bilddatenauslesevorrichtung 47 umfasst ferner einen Ausgang 53 und stellt in der in Fig. 1 dargestellten Ausgestaltung eine Bilderzeugungsvorrichtung 55 dar.

In Fig. 1 ist ferner gezeigt, dass der Scanspiegel 9 entlang einer Verkippungsrichtung 57 verkippt werden kann, sodass sich der Beleuchtungsstrahlengang in der Beobachtungsoptik 7 entlang einer Verschieberichtung 59 verschiebt. Auch die Beleuchtungsebene 31 verschiebt sich durch die Verkippung des Scanspiegels entlang der Verschieberichtung 59.

In nicht gezeigten Ausgestaltungen eines Schiefeebenenmikroskops 2a, zum Beispiel einem Oblique Plane Mikroskop, kann die Beleuchtungsebene 31 mittels eines Verschiebeelementes, wie zum Beispiel einem Verschiebetisch (beide nicht gezeigt) in der Probe verschoben werden.

Die Verschiebung der Beleuchtungsebene 31 hat im SCAPE- Mikroskop 3 zur Folge, dass sich das im Teleskop 19 ausbildende erste Zwischenbild 37 der Beleuchtungsebene 31 ebenso entlang der Verschieberichtung 59 verschiebt. Da ein Abbildungsstrahlengang 61 des Streu- oder Fluoreszenzlichtes 33 ebenso auf den verkippten Scanspiegel 9 trifft, wird der Versatz des Abbildungsstrahlenganges 61 durch den Scanspiegel 9 wieder kompensiert, sodass der Abbildungsstrahlengang 61a statisch ist und von einer Bewegung des Scanspiegels 9 nicht beeinflusst wird. Durch den statischen Abbildungsstrahlengang 61a wird die Beleuchtungsebene 31, welche sich in verschiedenen Positionen in der Probe 29 befinden kann, somit statisch, d.h. stets an der selben Stelle in der Fokusebene 43 auf dem Flächensensor 45 abgebildet.

In einem als Oblique Plane Mikroskop ausgestalteten Schiefeebenenmikroskop 2a ist das erste Zwischenbild 37 statisch.

Die Fig. 1 zeigt ferner, dass zur Beschreibung drei verschiedene Koordinatensysteme herangezogen werden. Das Probenkoordinatensystem 63 weist die Probenkoordinaten z und x auf, wobei die Probenkoordinate z parallel zur optischen Achse 23 der Beobachtungsoptik 7 verläuft.

Ferner ist ein Beleuchtungskoordinatensystem 65 gezeigt, welches die Beleuchtungskoordinaten x' und z' umfasst. Ein Sensorkoordinatensystem 67 ist lediglich mit der Sensorkoordinate z" gezeigt.

Alle Koordinatensysteme 63, 65, 67 haben eine y-Koordinate gemeinsam, die beim Übergang in ein anderes Koordinatensystem nicht transformiert werden muss.

Entlang der Beleuchtungskoordinate z` verläuft eine Beleuchtungsrichtung 101, entlang welcher die Beleuchtungsebene 31 beleuchtet wird.

In Fig. 1 ist das SCAPE-Mikroskop 3 zum Zeitpunkt t₁ gezeigt, d.h., dass in der statischen Darstellung lediglich Bildinformationen aus der eingezeichneten Beleuchtungsebene 31 auf dem Flächensensor 45 abgebildet und vom Bilddatenprozessor 49 mittels einer Anzeigevorrichtung 69 als Vorschaubild 71 angezeigt werden kann.

Das gezeigte Vorschaubild 71 entspricht allerdings einer Betrachtungsebene 73, die mit der gezeigten Beleuchtungsebene 31 zusammenfällt. Diese ist unter dem Verkippungswinkel 27 zur optischen Achse 23 verkippt und erschwert durch diese Verkippung einem Benutzer die Orientierung in der Probe 29.

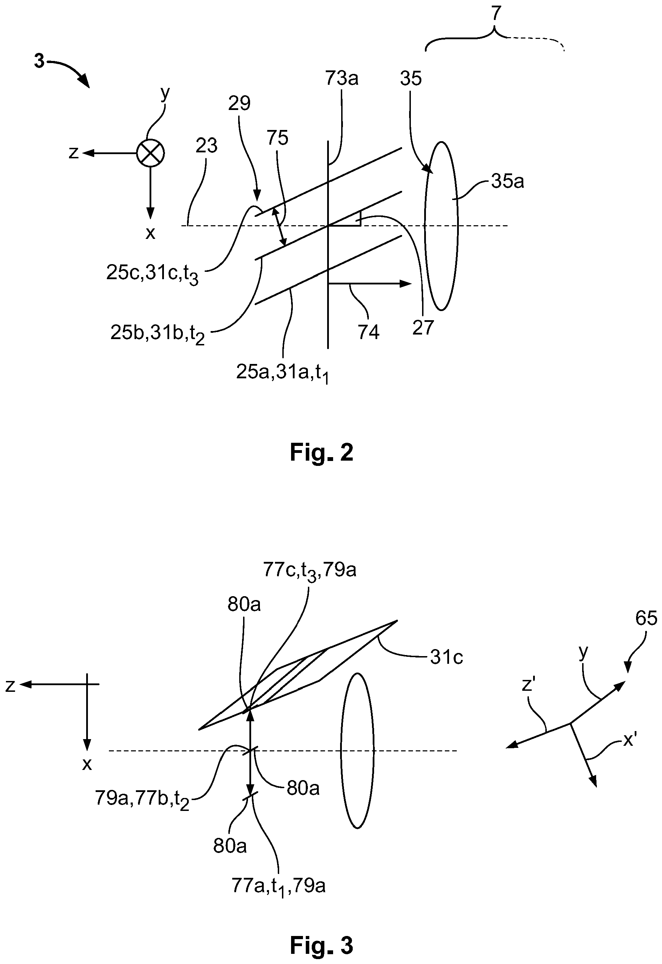

Die Fig. 2 zeigt ein Detail eines SCAPE Mikroskop 3, wobei lediglich die Pupille 35 und die Frontlinse 35 der Beobachtungsoptik 7 gezeigt ist.

Ferner zeigt die Fig. 2 Beleuchtungsebenen 31a, 31b, 31c, welche zu den Zeitpunkten t₁, t₂ und t₃ beleuchtet werden. Die Lichtblätter 25a - 25c entsprechen den Beleuchtungsebenen 31a-31c und weisen einen Abstand 75 zueinander auf und sind im Wesentlichen parallel zueinander orientiert, d.h., dass die gezeigten Beleuchtungsebenen 31 jeweils im Verkippungswinkel 27 zur optischen Achse 23 verkippt sind.

Die Fig. 2 zeigt ferner eine Betrachtungsebene 73a, welche senkrecht zur optischen Achse 23 orientiert ist und eine einfache Orientierung des Anwenders in der Probe 29 erlaubt. Diese bevorzugte Betrachtungsebene 73a wird von der Probenkoordinate x und der y-Koordinate aufgespannt. Die Betrachtungsebene 73a weist einen Normalenvektor 74 auf, der senkrecht auf dieser steht und parallel zur optischen Achse 23 orientiert ist.

In Fig. 3 ist dieselbe Situation wie in Fig. 2 dargestellt, wobei lediglich Vorschaustreifen 77a, 77b und 77c dargestellt sind, welche zu den Zeitpunkten t₁, t₂ und t₃ beleuchtet werden.

Die in Fig. 3 dargestellten Vorschaustreifen 77a-77c sind als Streifen 80a bzw. als streifenförmige Ausschnitte 79a der jeweiligen Beleuchtungsebenen 31 zu verstehen, was am Beispiel des Vorschaustreifens 77c mit einer perspektivischen Ansicht nur dieser Beleuchtungsebene 31c und dieses Vorschaustreifens 77c gezeigt ist. Zur Verdeutlichung der perspektivischen Ansicht ist für die Beleuchtungsebene 31c das Beleuchtungskoordinatensystem 65 eingezeichnet.

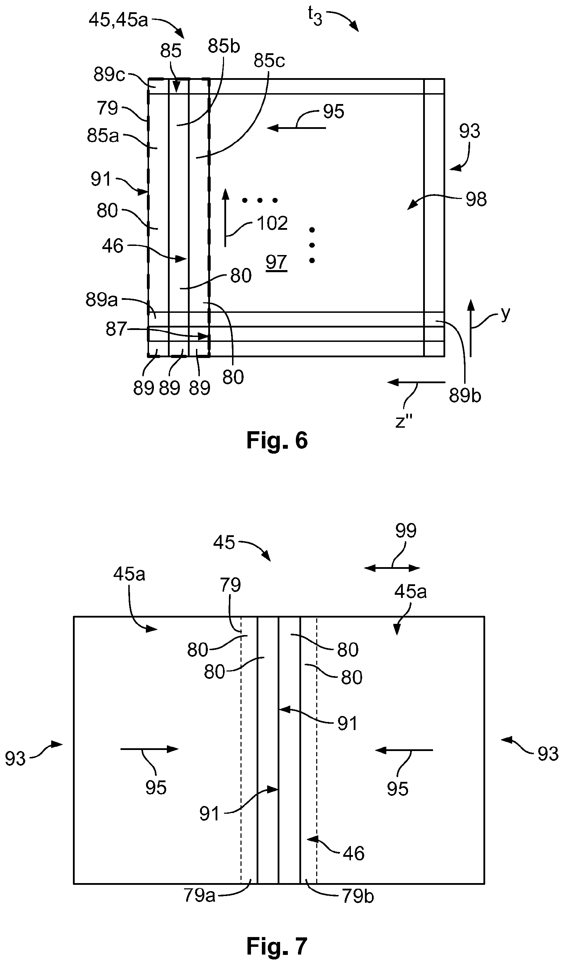

Auf den in Fig. 3 gezeigten Sachverhalt wird in der Beschreibung zu Fig. 6 nochmals eingegangen.

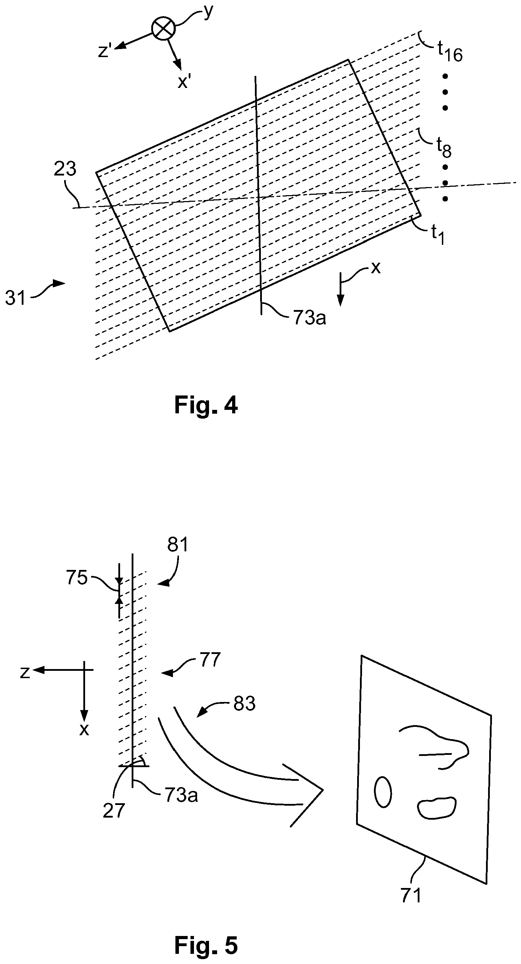

In der Fig. 4 ist eine Vielzahl von Beleuchtungsebenen 31 gezeigt, welche zu aufeinander folgenden Zeitpunkten t₁-t₁₆ beleuchtet werden. Die Beleuchtungsebenen 31 erstrecken sich entlang der Beleuchtungskoordinate z` und der y-Koordinate. Ebenso ist die Betrachtungsebene 73a eingezeichnet, welche sich entlang der Probenkoordinate x und der y-Koordinate erstreckt.

Die gezeigte Betrachtungsebene 73a stellt jene Betrachtungsebene dar, welche für einen Anwender am einfachsten handhabbar ist, da diese senkrecht zur optischen Achse 23 der Beobachtungsoptik 7 orientiert ist.

Um ein in der Betrachtungsebene 73a liegendes Vorschaubild 71 zu erzeugen, ist es somit notwendig, Bildinformationen in Form von Helligkeitsverteilungen 81 aus einer Vielzahl von Beleuchtungsebenen 31 zusammenzufassen, wobei lediglich die Helligkeitsverteilung 81 in der Nähe der Betrachtungsebenen 73a verwendet wird. Dieser Sachverhalt ist in Fig. 5 dargestellt, welche eine Vielzahl von Vorschaustreifen 77 zeigt, wobei die Vorschaustreifen 77 jeweils symmetrisch von der Betrachtungsebene 73a geschnitten werden.

Durch eine Mittelung 83 der einzelnen Helligkeitsverteilungen 81 der Vielzahl von Vorschaustreifen 77 entlang der Probenkoordinate z kann somit ein Vorschaubild 71 erzeugt werden.

Die Erzeugung des Vorschaubildes 71 ist in der Fig. 5 lediglich beispielhaft gezeigt. Diese erfolgt nicht auf optischem Wege in der Probe 29, sondern unter Berücksichtigung des Abstandes 75 der Vorschaustreifen 77 zueinander und des Verkippungswinkels 27 der Vorschaustreifen 77 im Bilddatenprozessor 49 (siehe Fig. 1).

In der Fig. 6 ist eine erste Ausgestaltung des Flächensensors 45 in einer Draufsicht gezeigt. Der Flächensensor 45 ist ein zeilenweise auszulesender Flächensensor 45a, welcher photosensitive Elemente 89 umfasst, die Zeilen 85 und Spalten 87 ausbilden.

Die Zeilen 85 sind entlang der y-Koordinate ausgerichtet, wohingegen die Spalten 87 entlang der Sensorkoordinate z" orientiert sind.

Der gezeigte Flächensensor 45 weist einen Ausleseanfang 91 und ein Ausleseende 93 auf, die eine Ausleserichtung 95 definieren. Dies führt dazu, dass bei einem Auslesevorgang das photosensitive Element 89a zu Beginn des Auslesevorganges ausgelesen wird, wohingegen das photosensitive Element 89b am Ende des Auslesevorganges ausgelesen wird.

Da der gezeigte Flächensensor 45 ein abschnittsweise auszulesender Flächensensor 45a ist, wird in einem Ausleseschritt jeweils ein Auslesebereich 80 ausgelesen, so dass das photosensitive Element 89c zeitgleich mit dem photosensitiven Element 89a ausgelesen wird. Der Auslesebereich 80 der in Fig. 6 gezeigten Ausgestaltung des Flächensensors 45 umfasst eine Zeile 85 und erstreckt sich in einer Längserstreckung 102.

In anderen Ausgestaltungen des Flächensensors 45 kann der Auslesebereich 80 mehrere Zeilen, entlang ihrer kompletten Länge bzw. abschnittsweise, umfassen Die Vielzahl photosensitiver Elemente 89 bilden ein Feld 97 aus, in welchem eine Ladungsträgerverteilung 98 durch eingestrahltes Licht generiert wird. Diese Ladungsträgerverteilung 98 wird beim Auslesen entlang der Ausleserichtung 95 zum Ausleseanfang 91 verschoben. Die Ausleserichtung 95 ist somit als physikalische Ausleserichtung der Verschiebung der Ladungsträgerverteilung 98 zu verstehen.

Betrachtet man einen Auslesevorgang, so wird bei diesem seriell, d.h. nacheinander beginnend mit der Zeile 85a, gefolgt von der Zeile 85b und der Zeile 85c jeweils ein Auslesebereich 80, d.h. eine komplette Zeile 85 aus dem abschnittsweise auszulesenden Flächensensor 45a ausgelesen. Wird der Auslesevorgang nach dem Auslesen der Zeile 85c gestoppt, so definieren die Zeilen 85a-85c ein Streifenabbild 79, das heißt eine Abbildung 46 des Vorschaustreifen 77 der jeweiligen Beleuchtungsebenen 31 (nicht gezeigt). Das in Fig. 6 gezeigte Streifenabbild 79 umfasst drei Auslesebereiche 80.

Das Streifenabbild 79 auf dem Flächensensor 45 entspricht somit einem streifenförmigen Ausschnitt 79a der entsprechenden Beleuchtungsebene 31. Diese streifenförmigen Ausschnitte 79a in der Beleuchtungsebene 31 sind in den Figuren 3 und 5 als Vorschaustreifen 77, 77a, 77b, 77c dargestellt und benannt. An dieser Stelle sei nochmals erwähnt, dass die Selektion eines streifenförmigen Ausschnittes 79a in der Beleuchtungsebene 31 durch das Auslesen des eine bestimmten Anzahl von Beleuchtungsebenen 80 umfassenden Streifenabbildes 79 des Flächensensors 45, d.h. durch den Flächensensor 45, und nicht durch eine begrenzte Beleuchtung der entsprechenden Beleuchtungsebene 31 geschieht.

Das in Fig. 6 gezeigte Streifenabbild 79 ist beispielsweise zum Zeitpunkt t₃ aufgenommen und entspricht somit dem Abbild des streifenförmigen Ausschnittes 79, d.h. dem Vorschaustreifen 77c der Fig. 3.

Die Fig. 7 zeigt eine zweite Ausgestaltung des Flächensensors 45, welche zwei abschnittsweise auszulesende Flächensensoren 45a umfasst.

Beide abschnittsweise auszulesende Flächensensoren 45a weisen ein Ausleseende 93 und einen Ausleseanfang 91 auf, wobei die Ausleseanfänge 91 nebeneinander und parallel zueinander angeordnet sind. Die Ausleserichtungen 95 der beiden abschnittsweise auszulesenden Flächensensoren 45a sind somit entgegengerichtet auf die nebeneinanderliegenden Ausleseanfänge 91 weisend.

Idealerweise wird die Abbildung 46 eines Vorschaustreifens 77 derart auf den in Fig. 7 gezeigten Flächensensor 45 abgebildet, dass dieser symmetrisch auf beiden abschnittsweise auszulesenden Flächensensoren 45a abgebildet ist und entlang des zeilenförmigen Ausleseanfangs 91 jedes abschnittsweise auszulesenden Flächensensors 45a orientiert ist. Ein derartiges Streifenabbild 79 ist in Fig. 7 eingezeichnet, wobei das Streifenabbild 79 eine erste Hälfte 79b und eine zweite Hälfte 79c aufweist, die beim Auslesevorgang simultan vom jeweiligen abschnittsweise auszulesenden Flächensensor 45a ausgelesen werden.

In der in Fig. 7 gezeigten Ausgestaltung weisen sowohl die erste Hälfte 79b, als auch die zweite Hälfte 79c des Streifenabbildes 79 jeweils zwei Auslesebereiche 80 auf, sodass zum Auslesen des gezeigten Streifenabbild 79 zwei Ausleseschritte notwendig sind.

Aufgrund des simultanen Auslesens wird mit der zweiten Ausgestaltung des Flächensensors 45 der Fig. 7 ein Streifenabbild 79 etwa doppelt so schnell ausgelesen, wie das gleiche Streifenabbild 79 von der ersten Ausgestaltung des Flächensensors 45 der Fig.6.

Ferner weist die zweite Ausgestaltung des Flächensensors 45 der Fig. 7 den bedeutenden Vorteil auf, dass mit diesem ein Vorschaubild 71 erzeugt werden kann, welches eine Betrachtungsebene 73a wiedergibt, die sich in Richtung der optischen Achse 23 zentriert in der Probe 29 befindet. Somit ist es möglich, mit Hilfe des Vorschaubildes 71, welches mittels einer Bewegung 99 der zweiten Ausgestaltung des Flächensensors 45 entlang der optischen Achse 23 verschoben werden kann, den korrekten Bereich zur Aufnahme eines dreidimensionalen Mikroskopiebildes in voller Auflösung einzustellen. Die erste Ausgestaltung des Flächensensors 45 der Fig. 6 erlaubt auch eine Orientierung mit Hilfe des Vorschaubildes 71 in der Probe 29, allerdings würde sich der dreidimensionale mikroskopierte Bereich bei Aufnahme mit voller Auflösung lediglich oberhalb der Betrachtungsebene 73a befinden, sofern nicht die Probe 29 bzw der Zeilen- 44 oder Flächensensor 45 entsprechend neu positioniert werden.

## Patentansprüche

1. Verfahren zum Erzeugen eines Vorschaubildes (71) mit einem Schiefeebenenmikroskop (2a), umfassend die Verfahrensschritte des Beleuchtens von zu aufeinanderfolgenden Zeitpunkten (t₁-tₓ) verschiedener, gegenüber einer optischen Achse (23) einer Beobachtungsoptik (7) verkippter und zueinander beabstandeter Beleuchtungsebenen (31) und des Abbildens auf einen Sensor (44, 45, 45a) mit zeilenweise angeordneten photosensitiven Elementen (89), **dadurch gekennzeichnet, dass** jeweils mindestens ein streifenförmiger, in seiner Längserstreckung (102) zeilenparallel orientierter und in einem Ausleseschritt auslesbarer Auslesebereich (80) des Sensors (44, 45, 45a) ausgelesen wird, und dass aus nacheinander ausgelesenen Auslesebereichen (80) ein Vorschaubild (71) erzeugt wird, das eine in einer senkrecht zur optischen Achse (23) der Beobachtungsoptik (7) liegende Betrachtungsebene (73a) wiedergibt.

2. Verfahren nach Anspruch 1, wobei ein Vorschaustreifen (77) jeder der zu aufeinanderfolgenden Zeitpunkten (t₁-tₓ) generierten Beleuchtungsebenen (31) als Streifenabbild (79) auf dem Sensor (44, 45, 45a) abgebildet wird und wobei das Streifenabbild (79) mindestens einen in einem Ausleseschritt auslesbaren Auslesebereich (80) umfasst.

3. Verfahren nach Anspruch 1 oder 2, wobei der mindestens eine Auslesebereich (80) jeweils zu Beginn eines Auslesevorgangs aus dem Sensor (44, 45, 45a) ausgelesen wird.

4. Verfahren nach einem der Ansprüche 1 bis 3, wobei der Vorschaustreifen (77) jeder der Beleuchtungsebenen (31) auf einem Ausleseanfang (91) des Sensors (44, 45, 45a) abgebildet wird.

5. Verfahren nach einem der Ansprüche 1 bis 4, wobei der mindestens eine Auslesebereich (80) sich über wenigstens zwei separat auslesbare Sensoren (44, 45, 45a) erstreckt.

6. Verfahren nach einem der Ansprüche 1 bis 5, wobei die nacheinander ausgelesenen Auslesebereiche (80) jedes Streifenabbildes (79) in Abhängigkeit von einem Verkippungswinkel (27) der jeweiligen Beleuchtungsebene (31) zur optischen Achse (23) der Beobachtungsoptik (7) und/oder in Abhängigkeit von einem Abstand (75) zwischen zu unterschiedlichen Zeitpunkten (t₁-tₓ) beleuchteten Beleuchtungsebenen (31) entschert und/oder gemittelt werden und damit das Vorschaubild (71) erzeugt wird.

7. Verfahren nach einem der Ansprüche 1 bis 6, wobei der Sensor (44, 45, 45a) verschoben wird, um die Lage der Abbildung (46) der Beleuchtungsebene (31) relativ zum Sensor (44, 45, 45a) zu ändern.

8. Schiefeebenenmikroskop (2a), welches ausgestaltet ist, zu aufeinanderfolgenden Zeitpunkten (t₁-tₓ) verschiedene, gegenüber einer optischen Achse (23) einer Beobachtungsoptik (7) verkippte und zueinander beabstandete Beleuchtungsebenen (31) auf einem Sensor (44, 45, 45a) des Mikroskops (2) abzubilden, wobei der Sensor (44, 45, 45a) zeilenweise angeordnete photosensitive Elementen (89) umfasst, und wobei das Mikroskop (2) einen Bilddatenprozessor (49) mit einer Schnittstelle (50) zur Ausgabe eines Vorschaubildes (71) aufweist, das eine senkrecht zur optischen Achse (23) der Beobachtungsoptik (7) liegende Betrachtungsebene (73a) wiedergibt, **dadurch gekennzeichnet, dass** der Sensor (44, 45, 45a) mindestens einen streifenförmigen und in seiner Längserstreckung zeilenparallelen Auslesebereich (80) umfasst und dass das Vorschaubild (71) aus nacheinander ausgelesenen streifenförmigen Auslesebereichen (80) der Abbildung (46) der nacheinander beleuchteten Beleuchtungsebenen (31) zusammengesetzt ist.

9. Mikroskop (2) nach Anspruch 8, wobei der Sensor (45, 45a) wenigstens ein Feld (97) photosensitiver Elemente (89) aufweist, die mindestens zwei Auslesebereiche (80) ausbilden, die seriell in einer Ausleserichtung (95) auszulesen sind, wobei wenigstens ein Auslesebereich (80) an einem Ausleseanfang (91) des Sensors (45a) liegt und dass die Abbildung (46) eines Vorschaustreifens (77) senkrecht zur Ausleserichtung (95) ausgerichtet ist.

10. Mikroskop (2) nach Anspruch 9, wobei mindestens zwei Sensoren (44, 45, 45a) vorgesehen sind, deren Ausleseanfänge (91) sich gegenüberliegend angeordnet und im Wesentlichen parallel zueinander ausgerichtet sind.

11. Mikroskop (2) nach Anspruch 9 oder 10, wobei der Vorschaustreifen (77) auf wenigstens einem Ausleseanfang (91) abgebildet ist.

12. Mikroskop (2) nach einem der Ansprüche 8 bis 11, wobei der mindestens eine Sensor (44, 45, 45a) entlang der Längserstreckung (102) des mindestens einen Auslesebereiches (80) und/oder entlang bzw. entgegen seiner Ausleserichtung (95) verschiebbar angeordnet ist.

13. Mikroskop (2) nach einem der Ansprüche 8 bis 12, wobei der mindestens eine Sensor (44, 45, 45a) um seinen Normalenvektor (74) in mindestens zwei im Wesentlichen senkrecht zueinander orientierte Drehpositionen drehbar angeordnet ist.

14. Mikroskop (2) nach einem der Ansprüche 8 bis 13, wobei der Bilddatenprozessor (49) eine Entscher- und/oder Mittelungsvorrichtung (51) umfasst, welche die zu aufeinanderfolgenden Zeitpunkten (t₁-tₓ) von einer Bilddatenauslesevorrichtung (47) aus dem Sensor (44, 45, 45a) ausgelesenen streifenförmigen Auslesebereichen (80) des jeweiligen Streifenabbildes (79) in Abhängigkeit von einem Verkippungswinkel (27) der jeweiligen Beleuchtungsebene (31) zur optischen Achse (23) der Beobachtungsoptik (7) und/oder in Abhängigkeit von einem Abstand (75) zwischen zeitlich nacheinander beleuchteten Beleuchtungsebenen (31) entschert und/oder mittelt und das Vorschaubild (71) erzeugt.

15. Bilderzeugungsvorrichtung (55) für ein Schiefeebenenmikroskop (2a), welches ausgestaltet ist, zeitlich nacheinander eine Mehrzahl von schräg gegenüber einer optischen Achse (23) einer Beobachtungsoptik (7) verlaufende, voneinander beabstandete Beleuchtungsebenen (31) zu erzeugen und auf einen Sensor (44, 45, 45a) abzubilden, wobei die Bilderzeugungsvorrichtung (55) den zeilenweise angeordnete photosensitive Elemente (89) umfassenden Sensor (44, 45, 45a), eine Bilddatenauslesevorrichtung (47) mit einem Ausgang (53) und einen Bilddatenprozessor (49) umfasst, **dadurch gekennzeichnet, dass** an dem Ausgang (53) der Bilddatenauslesevorrichtung (47) mindestens ein streifenförmiger, entlang seiner Längserstreckung zeilenparallel orientierter ausgelesener Auslesebereich (80) der Abbildung (46) der jeweiligen Beleuchtungsebene (31) zur Verfügung gestellt wird, und dass durch den Bilddatenprozessor (49), aus den ausgelesenen Auslesebereichen (80) ein Vorschaubild (71) erzeugt wird, das eine in einer senkrecht zur optischen Achse (23) der Beobachtungsoptik (7) liegende Betrachtungsebene (73a) wiedergibt.

## Claims

1. A Method for generating a preview image (71) with an inclined plane microscope (2a), comprising the method steps of illuminating at successive times (t₁-tₓ) different illumination planes (31) which are tilted with respect to an optical axis (23) of an observation optics (7) and spaced apart from one another, and of imaging onto a sensor (44, 45, 45a) with photosensitive elements (89) arranged line by line, **characterized in that** in each case at least one strip-shaped read-out region (80) of the sensor (44, 45, 45a), which is oriented parallel to the lines in its longitudinal extent (102) and can be read out in a read-out step, is read out, and **in that** a preview image (71) is generated from successively read-out regions (80), which preview image reproduces a viewing plane (73a) lying perpendicular to the optical axis (23) of the observation optics (7).

2. The method according to claim 1, wherein a preview strip (77) of each of the illumination planes (31) generated at successive times (t₁-tₓ) is imaged as a strip image (79) on the sensor (44, 45, 45a) and wherein the strip image (79) comprises at least one readout region (80) which can be read out in a readout step.

3. The method according to claim 1 or 2, wherein the at least one readout region (80) is read out from the sensor (44, 45, 45a) at the beginning of each readout process.

4. The method according to one of claims 1 to 3, wherein the preview strip (77) of each of the illumination planes (31) is imaged on a readout start (91) of the sensor (44, 45, 45a).

5. The method according to one of claims 1 to 4, wherein the at least one readout region (80) extends over at least two separately readable sensors (44, 45, 45a).

6. The method according to one of claims 1 to 5, wherein the successively read-out read-out regions (80) of each strip image (79) are de-scaled and/or averaged as a function of a tilt angle (27) of the respective illumination plane (31) with respect to the optical axis (23) of the observation optics (7) and/or as a function of a distance (75) between illumination planes (31) illuminated at different points in time (t₁-tₓ), and the preview image (71) is thus generated.

7. The method according to any one of claims 1 to 6, wherein the sensor (44, 45, 45a) is shifted to change the position of the image (46) of the illumination plane (31) relative to the sensor (44, 45, 45a).

8. An inclined plane microscope (2a) which is designed to image at successive points in time (t₁-tₓ) different illumination planes (31) on a sensor (44, 45, 45a) of the microscope (2a) which are tilted relative to an optical axis (23) of an observation optics (7) and spaced apart from one another, of the microscope (2), wherein the sensor (44, 45, 45a) comprises photosensitive elements (89) arranged line by line, and wherein the microscope (2) has an image data processor (49) with an interface (50) for outputting a preview image (71), which reproduces a viewing plane (73a) lying perpendicular to the optical axis (23) of the observation optics (7), **characterized in that** the sensor (44, 45, 45a) comprises at least one strip-shaped read-out region (80) which is parallel in its longitudinal extension, and **in that** the preview image (71) is composed of successively read-out strip-shaped read-out regions (80) of the image (46) of the successively illuminated illumination planes (31).

9. The microscope (2) according to claim 8, wherein the sensor (45, 45a) has at least one array (97) of photosensitive elements (89) which form at least two readout regions (80) which are to be read out serially in a readout direction (95), wherein at least one readout region (80) is located at a readout start (91) of the sensor (45a) and that the image (46) of a preview strip (77) is aligned perpendicularly to the readout direction (95).

10. The microscope (2) according to claim 9, wherein at least two sensors (44, 45, 45a) are provided, the readout beginnings (91) of which are arranged opposite one another and are aligned substantially parallel to one another.

11. The microscope (2) according to claim 9 or 10, wherein the preview strip (77) is imaged on at least one readout start (91).

12. The microscope (2) according to any one of claims 8 to 11, wherein the at least one sensor (44, 45, 45a) is arranged to be displaceable along the longitudinal extension (102) of the at least one readout region (80) and/or along or against its readout direction (95).

13. The microscope (2) according to any one of claims 8 to 12, wherein the at least one sensor (44, 45, 45a) is arranged rotatably about its normal vector (74) in at least two rotational positions oriented substantially perpendicular to each other.

14. The microscope (2) according to any one of claims 8 to 13, wherein the image data processor (49) comprises a de-scrambling and/or averaging device (51) which averages the stripe data read out from the sensor (44, 45, 45a) at successive points in time (t₁-tₓ) by an image data read-out device (47), 45a) of the respective stripe image (79) as a function of a tilt angle (27) of the respective illumination plane (31) relative to the optical axis (23) of the observation optics (7) and/or as a function of a distance (75) between illumination planes (31) illuminated in succession in time, and generates the preview image (71).

15. An Image-forming device (55) for an inclined plane microscope (2a) which is designed to generate a plurality of illumination planes (31) which run obliquely with respect to an optical axis (23) of an observation optics (7) and are spaced apart from one another in time succession and to image them onto a sensor (44, 45, 45a), wherein the image forming device (55) comprises the sensor (44, 45, 45a) comprising photosensitive elements (89) arranged line by line, an image data readout device (47) with an output (53) and an image data processor (49), **characterized in that** at least one strip-shaped read-out region (80) of the image (46) of the respective illumination plane (31), which is oriented parallel to the line along its longitudinal extent, is made available at the output (53) of the image data read-out device (47), and **in that** the image data processor (49) generates a preview image (71) from the read-out read-out regions (80), which preview image reproduces a viewing plane (73a) lying perpendicular to the optical axis (23) of the observation optics (7).

## Revendications

1. Procédé de génération d'une image de prévisualisation (71) avec un microscope à plan incliné (2a), comprenant les étapes de procédé consistant à éclairer des plans d'éclairage (31) espacés les uns des autres, inclinés par rapport à un axe optique (23) d'une optique d'observation (7) et différents à des instants (t₁ à tₓ) successifs, et à former une représentation sur un capteur (44, 45, 45a) munis d'éléments photosensibles (89) agencés ligne par ligne, **caractérisé en ce que** respectivement au moins une plage de lecture (80) du capteur (44, 45, 45a), pouvant être lue lors d'une étape de lecture, dont l'extension longitudinale (102) est orientée parallèlement aux lignes, et qui est en forme de bande, est lue, et **en ce qu'**une image de prévisualisation (71) reproduisant un plan d'observation (73a) perpendiculaire à l'axe optique (23) de l'optique d'observation (7) est produite à partir de plages de lecture (80) lues successivement.

2. Procédé selon la revendication 1, dans lequel une bande de prévisualisation (77) de chacun des plans d'éclairage (31) générés à des instants (t₁ à tₓ) successifs est représentée sous la forme d'une image en bande (79) sur le capteur (44, 45, 45a) et dans lequel l'image en bande (79) comprend au moins une plage de lecture (80) pouvant être lue lors d'une étape de lecture.

3. Procédé selon la revendication 1 ou 2, dans lequel la au moins une plage de lecture (80) est lue à partir du capteur (44, 45, 45a) respectivement au début d'une opération de lecture.

4. Procédé selon l'une quelconque des revendications 1 à 3, dans lequel la bande de prévisualisation (77) de chacun des plans d'éclairage (31) est représentée sur un début de lecture (91) du capteur (44, 45, 45a).

5. Procédé selon l'une quelconque des revendications 1 à 4, dans lequel la au moins une plage de lecture (80) s'étend sur au moins deux capteurs (44, 45, 45a) pouvant être lus séparément.

6. Procédé selon l'une quelconque des revendications 1 à 5, dans lequel les plages de lecture (80) lues successivement de chaque image en bande (79) sont découpées et/ou divisées en fonction d'un angle d'inclinaison (27) du plan d'éclairage (31) respectif par rapport à l'axe optique (23) de l'optique d'observation (7) et/ou en fonction d'un intervalle (75) entre des plans d'éclairage (31) éclairés à des instants (t₁ à tₓ) différents, et l'image de prévisualisation (71) est ainsi générée.

7. Procédé selon l'une quelconque des revendications 1 à 6, dans lequel le capteur (44, 45, 45a) est déplacé afin de modifier la position de la représentation (46) du plan d'éclairage (31) par rapport au capteur (44, 45, 45a).

8. Microscope à plan incliné (2a) conçu pour représenter des plans d'éclairage (31) espacés les uns des autres, inclinés par rapport à un axe optique (23) d'une optique d'observation (7) et différents à des instants (t₁ à tₓ) successifs, sur un capteur (44, 45, 45a) du microscope (2) à des instants successifs (t₁ à tₓ) différents, dans lequel le capteur (44, 45, 45a) comprend des éléments photosensibles (89) agencés ligne par ligne, et dans lequel le microscope (2) présente un processeur de données d'image (49) muni d'une interface (50) de sortie d'une image de prévisualisation (71) reproduisant un plan d'observation (73a) perpendiculaire à l'axe optique (23) de l'optique d'observation (7), **caractérisé en ce que** le capteur (44, 45, 45a) comprend au moins une plage de lecture (80) dont l'extension longitudinale est parallèle aux lignes et qui est en forme de bande, et **en ce que** l'image de prévisualisation (71) est composée de plages de lecture (80), en forme de bande et lues successivement, de la représentation (46) des plans d'éclairage (31) éclairés successivement.

9. Microscope (2) selon la revendication 8, dans lequel le capteur (45, 45a) présente au moins un champ (97) d'éléments photosensibles (89) qui forment au moins deux plages de lecture (80) lues de manière sérielle dans une direction de lecture (95), dans lequel au moins une plage de lecture (80) est située au niveau d'un début de lecture (91) du capteur (45a) et en ce que la représentation (46) d'une bande de prévisualisation (77) est orientée perpendiculairement à la direction de lecture (95).

10. Microscope (2) selon la revendication 9, dans lequel au moins deux capteurs (44, 45, 45a) sont fournis, dont les débuts de lecture (91) sont agencés l'un en face de l'autre et sont orientés de manière essentiellement parallèle l'un par rapport à l'autre.

11. Microscope (2) selon la revendication 9 ou 10, dans lequel la bande de prévisualisation (77) est représentée sur au moins un début de lecture (91).

12. Microscope (2) selon l'une quelconque des revendications 8 à 11, dans lequel le au moins un capteur (44, 45, 45a) est agencé de manière à pouvoir être déplacé le long de l'extension longitudinale (102) de la au moins une plage de lecture (80) et/ou le long ou à l'encontre de sa direction de lecture (95).

13. Microscope (2) selon l'une quelconque des revendications 8 à 12, dans lequel le au moins un capteur (44, 45, 45a) est agencé de manière à pouvoir tourner autour de son vecteur normal (74) dans au moins deux positions de rotation orientées de manière essentiellement perpendiculaire l'une par rapport à l'autre.

14. Microscope (2) selon l'une quelconque des revendications 8 à 13, dans lequel le processeur de données d'image (49) comprend un dispositif de découpage et/ou de division (51) qui découpe et/ou divise, en fonction d'un angle d'inclinaison (27) du plan d'éclairage (31) respectif par rapport à l'axe optique (23) de l'optique d'observation (7) et/ou en fonction d'un intervalle (75) entre des plans d'éclairage (31) éclairés de manière temporellement successive, les plages de lecture (80) en forme de bande de l'image en bande (79) respective lues à partir du capteur (44, 45, 45a) par un dispositif de lecture de données d'image (47) à des instants successifs (t₁ à tₓ), et qui produit l'image de prévisualisation (71).

15. Dispositif de génération d'image (55) pour un microscope à plan incliné (2a) qui est conçu pour générer de manière temporellement successive une pluralité de plans d'éclairage (31) espacés les uns des autres et s'étendant de manière oblique par rapport à un axe optique (23) d'une optique d'observation (7) et pour former une représentation sur un capteur (44, 45, 45a), dans lequel le dispositif de génération d'image (55) comprend le capteur (44, 45, 45a) comprenant des éléments photosensibles (89) agencés ligne par ligne, un dispositif de lecture de données d'image (47) muni d'une sortie (53) et un processeur de données d'image (49), **caractérisé en ce qu'**au moins une plage de lecture (80) lue, dont l'extension longitudinale est orientée parallèlement aux lignes et qui est en forme de bande, de la représentation (46) du plan d'éclairage (31) respectif est mise à disposition au niveau de la sortie (53) du dispositif de lecture de données d'image (47), et **en ce qu'**une image de prévisualisation (71) reproduisant un plan d'observation (73a) perpendiculaire à l'axe optique (23) de l'optique d'observation (7) est générée grâce au processeur de données d'image (49) à partir des plages de lecture (80) lues.
